# EUROPEAN PATENT APPLICATION

(11) **EP 1 785 463 A1**
(43) Date of publication of application: **16.05.2007**
(21) Application number: 05765408.9
(22) Date of filing: 28.06.2005
(51) Int. Cl.: C09K 11/02, C09K 11/00, H01J 9/227, H01J 11/02

(54) **GRANULES, AND METHOD OF FORMING FLUORESCENT SURFACE OFPLASMA DISPLAY PANEL USING THEM**

(30) Priority: 05.07.2004 JP 2004198475
(71) Applicant: Pioneer Corporation, Tokyo 153-8654 (JP)
(72) Inventor: HANAOKA, Minoru, Pioneer Corporation, Tsurugashima-shi, Saitama350-2288 (JP)
(74) Representative: Tappe, Hartmut
(86) International application number: PCT/JP2005/011836
(87) International publication number: WO 2006/003888

(57) **Abstract**

To provide a novel method for forming a plasma display panel and a granule used for this method.

A granule containing an organic binder as an auxiliary forming component, and a fluorescent substance dispersed and blended into the organic binder is used; such the granules and a mask sheet having a plurality of through holes for retaining the granules are prepared; a substrate having a barrier formed on it is mounted with its surface having the cells faced upwards; the mask sheet is disposed above the cells where fluorescent surfaces are to be formed on the substrate thus mounted; the granules are dispersed over a surface of the mask sheet thus disposed to retain the granules in the through holes provided in the mask sheet; the granules thus retained are heated to thereby melt the granules and make the liquefied granule thus obtained drop inside the cells on the substrate using the through holes; and the substrate having the liquefied granule thus dropped on it is heated to vaporize the organic binder contained in the liquefied granule thus dropped and to simultaneously form the fluorescent surface inside the cells by the fluorescent substance contained in the liquefied granule thus dropped.

## Description

### FIELD OF THE INVENTION

The present invention relates to a granule used in forming a fluorescent surface of plasma display panel and a method for forming the fluorescent surface of plasma display panel.

### BACKGROUND OF THE INVENTION

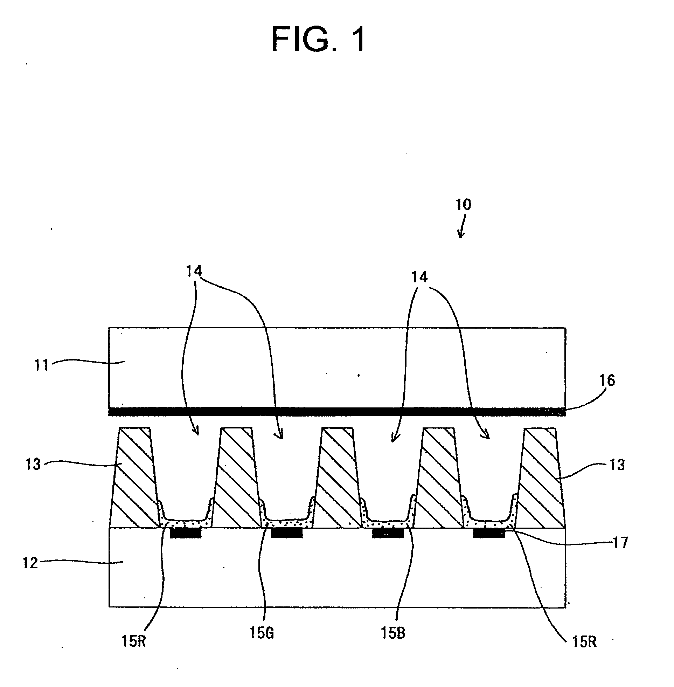

Figure 1 is a cross-sectional view for illustrating a structure of plasma display panel.

As shown in Figure 1, a plasma display panel 10 is constituted by a first substrate 11 and a second substrate 12 which are disposed in parallel and opposite to each other. On any one of surfaces on these substrates 11 and 12 (second substrate 12 in Figure 1), a barrier 13 is provided. A cell 14 (sub pixel) is formed as a display element. A fluorescent surface 15 (15R, 15G, 15B) made from a fluorescent substance for generating fluorescence of, for example, red (R), green (G), and blue (B) is provided inside the cell 14. Electrodes 16 and 17 are provided in the first substrate 11 and the second substrate 12 for discharging electricity inside the cell 14.

A technique utilized now, as a method of forming such a fluorescent surface 15 for plasma display panels 10, is to print fluorescent paints of red color (R), green color (G), and blue color (B)in paste form by a screen printing and so on, and thereafter dry and bake the fluorescent paints.

### DISCLOSURE OF THE INVENTION

### Problems to be solved by the Invention

However, when the fluorescent surface 15 is formed by a screen printing or the like, it is difficult to simultaneously print three colors of red (R), green (G), and blue (B). Therefore, it is necessary to form a fluorescent surface 15R of red color (R) by printing and drying a red fluorescent paint, then form a fluorescent surface 15G of green color (G) by printing and drying a green fluorescent paint, and then form a fluorescent surface 15B of blue color (B) by printing and drying a blue fluorescent paint. Substantial time and labor are required in separately providing each of the colors like that manner.

Further, when the screen printing is employed, a mask for silk screen printing is ordinarily used as a printing mask. In consideration of recent fineness of cells, there is concern for unevenness in printing.

The present invention is provided in consideration of the above situations. An illustrative object of the present invention is to provide a novel method for forming a fluorescent surface of plasma display panel, the method being different from a conventional method, and a novel granule used for this method.

### Means for Solving the Problems

To solve the above problems, the invention recited in Claim 1 is about a granule having characteristics that an organic binder is used as an auxiliary forming component and a fluorescent substance is dispersed and blended.

Further, in order to solve the above problems, the invention recited in Claim 4 is related to a method of forming a fluorescent surface of a plasma display panel having a plurality of cells as display elements provided in it, the cells being formed by barriers provided on any one of first and second substrates, which are disposed in parallel and opposite to each other, and the cells also being provided with the fluorescent surfaces made from a fluorescent substance in the plurality of cells, the method including steps of:
preparing the granules according to claim 1 and a mask sheet having a plurality of through holes, which can retain the granules, formed in it;
mounting the substrate having the barrier formed on it with its surface having the cells faced upwards;
disposing the mask sheet above the cells where fluorescent surfaces are to be formed on the substrate thus mounted;
dispersing the granules over a surface of the mask sheet thus disposed to retain the granules in the through holes provided in the mask sheet;
heating the granules thus retained to melt the granules and make the liquefied granule thus obtained drop inside the cells on the substrate using the through holes; and
heating the substrate having the liquefied granule thus dropped on it to vaporize the organic binder contained in the liquefied granule thus dropped and to simultaneously form the fluorescent surface inside the cells by the fluorescent substance contained in the liquefied granule thus dropped.

### BRIEF DESCRIPTION OF THE DRAWINGS

[Figure 1] A schematic cross-sectional view for explaining a structure of plasma display panel
[Figure 2] A schematic cross-sectional view for explaining a granule 20 according to the present invention
[Figure 3] A process chart for explaining a method for producing a fluorescent surface of display panel according to the present invention
[Figure 4] A cross-sectional view of a mask sheet used in a producing method of a fluorescent surface of plasma display panel according to the present invention
[Figure 5] A view for showing another embodiment of process (b) in Figure 3
[Figure 6] A view for showing another embodiment of process (b) in Figure 3

Major numerical references denote as follows.
10: plasma display panel; 11 : first substrate; 12: second substrate; 13: barrier; 14: cell (subpixel); 14R: cell provided with red fluorescent surface; 14G: cell provided with green fluorescent surface; 14B: cell provided with blue fluorescent surface; 15: fluorescent surface; 15R: red fluorescent surface; 15G: green fluorescent surface; 15B: blue fluorescent surface; 16,17: electrode; 20: granule; 20R: granule containing red fluorescent substance; 20G: granule containing green fluorescent substance; 20B: granule containing blue fluorescent substance; 21: organic binder; 22: fluorescent substance; 23: electric chargematerial ; 24: magneticmaterial ; 30: mask sheet; 31: through hole; 31R: through hole for retaining red granule(20R); 31G: through hole for retaining green granule (20G) ; 31B: through hole for retaining blue granule (20B); 32: guiding protrusion

### PREFERRED EMBODIMENTS FOR CARRYING OUT THE INVENTION

A granule according to the present invention is specifically described in reference of the figures.

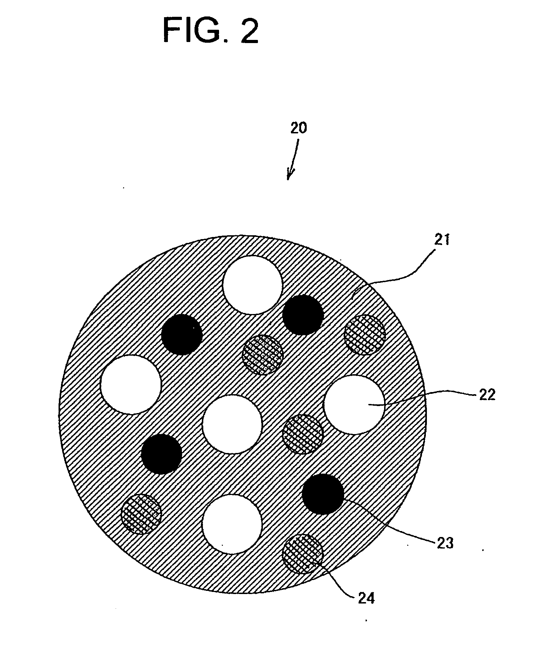

Figure 2 is a cross-sectional view schematically showing a granule 20 according to the present invention.

As shown in Figure 2, the granule 20 is characterized by having a fluorescent substance 22 dispersed and blended into it with use of an organic binder 21 as an auxiliary forming component.

Such the granule 20 is preferably used in "a method for forming a fluorescent surface of plasma display panel" described below according to the present invention. Although detail of "a method for forming a fluorescent surface of plasma display panel" according to the present invention will be described later, it is possible to easily provide a fluorescent surface for plasma display panel inside a predetermined cell with use of the granule according to the present invention. Because the granule 20 is a solid state under an ordinary temperature, it can be easily treated.

An organic binder 21 constituting the granule 20 according to the present invention may be any binder as long as a fluorescent substance can be dispersed and blended into it, and further the organic binder can be formed in a granule-like shape. Further, in "a method for forming a fluorescent surface of plasma display panel" according to the present invention, it is necessary to melt the granule during processes of the method. Therefore, it is necessary to melt the granule so as to be in a liquid state by heating it at an adequate temperature (ordinary temperature or more, e.g. 50-180 °C (Celsius)).

Such the organic binder 21 is specifically acrylic resin, polyester resin, various waxes (e.g. paraffinic wax), and so on.

Further, the fluorescent substance 22 to be dispersed and blended into the above organic binder itself conclusively becomes a fluorescent surface in a case where the fluorescent surface (15) of plasma display panel (10) is formed in use of for example the granule 20 (vide Figure 1). Accordingly, the fluorescent substance 22 is not specifically limited in the present invention, and it is possible to use all fluorescent substances (specifically fluorescent substances of red color, green color, and blue color), used for forming the fluorescent surfaces for plasma display by now. In an ordinary case, since a fluorescent surface of one color (any one color of RGB) is provided in one cell, the fluorescent substance 22 blended into one granule 20 has only any one of the colors (any one color of RGB).

Specifically, (YₓGd₁₋ₓ)BO₃:Eu ³⁺ may be used as the red fluorescent substance; Zn₂SiO₄:Mn²⁺ may be used as the green fluorescent substance; and BaMgAl₁₀O₁₇:Eu²⁺ may be used as the blue fluorescent substance.

Any one or both of an electric charge material 23 and a magnetic material 24 maybe dispersed and blended into the granule 20 according to the present invention in addition to the above fluorescent substance 22. In "a method for forming a fluorescent surface of plasma display panel" described below, by blending the electric charge material 23 into the granule 20, it is possible to retain the granule 20 only in a predetermined through hole formed in the mask sheet with use of an electrostatic force. As a result, it is possible to form a fluorescent surface only in a predetermined cell. In a manner similar thereto, by blending a magnetic material 24 into a granule 20, it is possible to provide a fluorescent surface in only a predetermined cell.

The electric charge material 23 and the magnetic material 24 are not specifically limited, and may be any material which can demonstrate a function of making the granule 20 retain only in the predetermined through hole by electrostatic force or magnetic force, and amount of blending these materials are not specifically limited. For example, calcium alkyl benzene sulfonate, dioctyl sodium sulfonate, and styrene- acrylic resin can be mentioned as the electric charge material can be mentioned. Meanwhile, ferrite, magnetite, and rare earths can be mentioned as the magnetic material.

Further, in the granule 20 according to the present invention, it is possible to blend dispersing agent represented by SiO₂ and TiO₂ (not shown). Further, an outer surface of the granule 20 according to the present invention may be coated by a conventional coating material (not shown). By coating the outside, it is possible to avoid coagulation among the granules 20 and breakage caused by friction.

Size of the granule 20 according to the present invention is not specifically limited, and can be arbitrarily determined in consideration of size of a through hole provided in a mask material, which is used along with the granule 20, and size of fluorescent surface in a plasma display panel. Specifically, it is preferably about 100 to 500µm, more preferably 200 to 400µm. Quantity of blending fluorescent substance 22 with respect to an organic binder 21 constituting a granule 20 is not specifically limited in the present invention and may arbitrarily be determined in consideration of the size of granule 20, the size of fluorescent surface in a plasma display panel, and so on.

Next, a method of producing the fluorescent surface (vide Figure 1) of plasma display panel according to the present invention is described in reference of drawings.

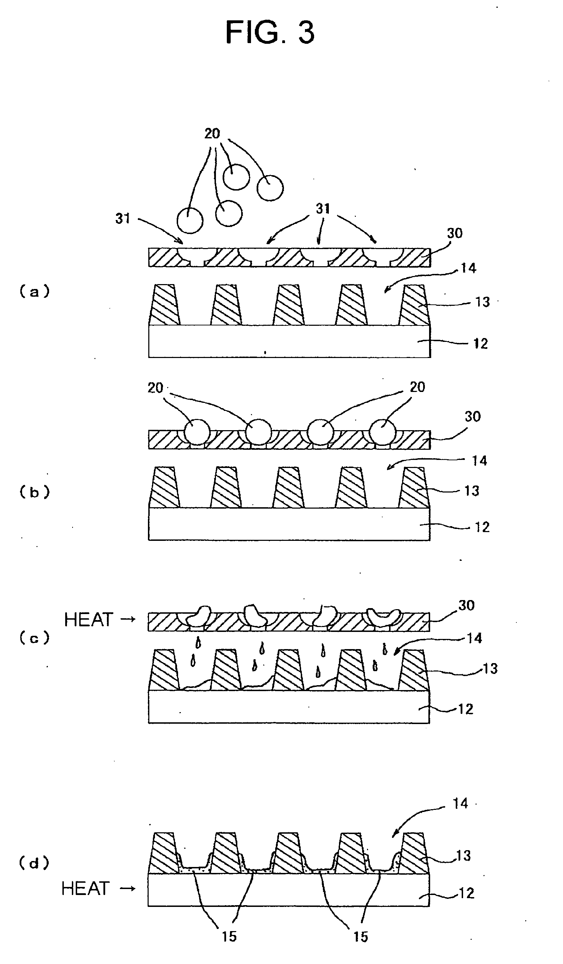

Figure 3 is a process chart for explaining the method for producing the fluorescent surface of plasma display panel according to the present invention. First, a flow (scheme) of the method according to the present invention is explained in reference of Figure 3.

In the method of producing the fluorescent surface of display panel according to the present invention, as in Figure 3(a), the granules 20 described above and a mask sheet 30 having a plurality through holes 31, in which the granules 20 can be retained, are used. A substrate 12 (vide Figure 1), which constitutes the plasma display panel and has a barrier 13 formed on it, is mounted with its surface having cells 14 faced upwards. Further, the mask sheet 30 is arranged so that the through holes 31 are positioned over the cells 14, in which fluorescent surfaces on the substrate are to be provided.

Next, as shown in Figure 3(b), by dispersing the granules 20 on or over the mask sheet 30 which is arranged above the cells 14, in which the fluorescent surfaces on the substrate 12 are to be provided, the mask sheet 30 allows the granules 20 to be retained in the through holes 31, which are formed in the mask sheet 30.

As shown in Figure 3(c), after melting the granules 20 thus retained by heating these, a liquid of thus melted granules is dropped into the cells 14 on the substrate 12 with use of the thorough holes 31

Furthermore, as shown in Figure 3(d), by heating the substrate 12 where the liquid is dropped, the organic binder 21 contained in the liquid thus dropped is vaporized, and simultaneously the fluorescent substance 22 contained in the liquid thus dropped is solidified, to thereby form the fluorescent surfaces 15 inside the cells 14.

Such the producing method according to the present invention is a completely novel method different from a screen printing method using a conventional silkscreen printing mask. Accordingly, it is possible to form a uniform fluorescent surface 15 without causing printing unevenness even in these days when fineness of cells is advancing.

Hereinafter, the above-described processes (a) to (d) shown in Figure 3 are described in detail.

### Process shown in Figure 3(a)

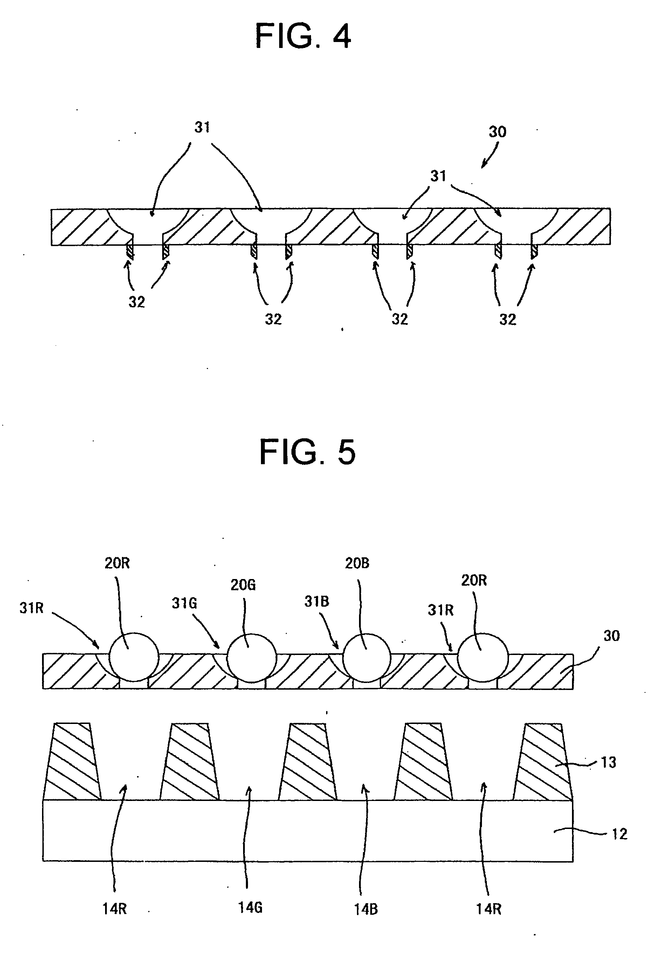

This process is to prepare each of the granule 20, the mask sheet 30, and the substrate 12, which are used in the method according to the present invention. Detailed description is not specifically provided. A shape of mask sheet 30 is not specifically limited to that shown in Figure 3 as long as a through hole 31 is formed in the mask sheet 30 so that granules are retained for a predetermined time (specifically a time while the granules 20 are melted). For example, as shown in Figure 4, a guide protrusion 32 may be formed on a surface of the mask sheet 30, opposite to a side where the granules 20 are retained, so that the guide protrusion 32 guides the granule which drops into a predetermined cell through the through hole 31. By providing such the guide protrusions 32, it is possible to more accurately drop the granules thus dropped into the predetermined cells.

### Process shown in Figure 3(b)

This process is to retain the granule 20 into the through hole 31 by dispersing the granule 20 onto a surface of the mask sheet thus mounted. A means for dispersing the granule 20 is not specifically limited in the present invention. Any means can be used as long as the granule 20 can be retained into the through hole 31, formed in the mask sheet 30. Specifically, the granules 20 may be dispersed onto the mask sheet 30 with use of, for example, a spraying device, and vibrates the mask sheet with use of a vibrating device(not shown), to thereby securely retain the granules 20 thus dispersed into the through hole 31 on the mask sheet.

Further, an extra granule 20, i. e. the granule 20 remaining in the surface of mask sheet 30 without being retained in the through hole 31, can be recovered by an appropriate means and reused. A means for recovering the extra granules is not specifically limited. For example, the recovery is enabled to cant the mask sheet 30. However, when if the extra granules 20 are recovered, it is necessary to maintain the granules 20, retained in the through holes 31 that are once retained, as is.

Figure 5 shows a mode of carrying out the invention other than the process (b) shown in Figure 3.

As shown in Figure 5 according to the present invention, for example, it is preferable to retain a granule 20R containing a red fluorescent substance, a granule 20G containing a green fluorescent substance, and a granule 20B containing a blue fluorescent substance respectively in through holes 31(i.e. through holes 31R corresponding to red fluorescent surfaces, through holes 31G corresponding to green fluorescent surfaces, and through holes 31B corresponding to blue fluorescent surfaces), which are positioned at predetermined positions on a mask sheet 30 and over cells 14 (i.e. cells 14R having a red fluorescent surface, cells 14G having a green fluorescent surface, and cells 14B having a blue fluorescent surface). By retaining fluorescent substances 20 of each color respectively in the predetermined through holes 31, it becomes possible to finish each of the processes (c) and (d), to be followed , at one clip, thereby enabling to drastically reduce a time for forming fluorescent surfaces of the three colors.

In this, the present invention is not specifically limited with respect to a method for retaining the fluorescent substances 20 of these colors into the predetermined through holes 31. For example, "the above-described fluorescent substances 20 in which any one or both of an electric charge material and a magnetic material are dispersed and blended" may be used to utilize electrostatic force or magnetic fore, thereby selectively retaining the fluorescent substance 20 into the predetermined through hole 31. Specifically, for example, when a fluorescent substance 20 into which an electric charge material is dispersed and blended, it is possible to electrize the fluorescent substance 20 (e.g. red fluorescent substance 20R) to any one of plus and minus. On the other hand, by applying an electric field so that a predetermined through hole 31(31R) in a mask sheet has an electric charge adverse to that of fluorescent substance 20, it becomes possible to make the fluorescent substance 20 be retained in only the predetermined through hole 31(31R). Further, under a state where the electric field is applied, extra granules 20(including fluorescent substances retained in through holes, e.g. the through hole for a green color (31G)and the through hole for a blue color (31B)), which do not inherently require retention of granule) may be recovered. Thereafter, it is ceased from applying the electric field to the through holes 31R for a red color. Under the state that the electric field is applied to the through hole for green color 31G, the green fluorescent substance 20G is dispersed, thereby enabling the green fluorescent substance 20G to retain only into the through holes of green color 31G in a manner similar to the above process. In a similar manner thereto, the blue fluorescent substance 31B can be retained into the through holes 31B. Although the above description is to utilize the electrostatic force in use of the fluorescent substance 20 containing the electro charge material, magnetic force may be utilized along with use of the fluorescent substance 20 in which a magnetic material 20 is contained.

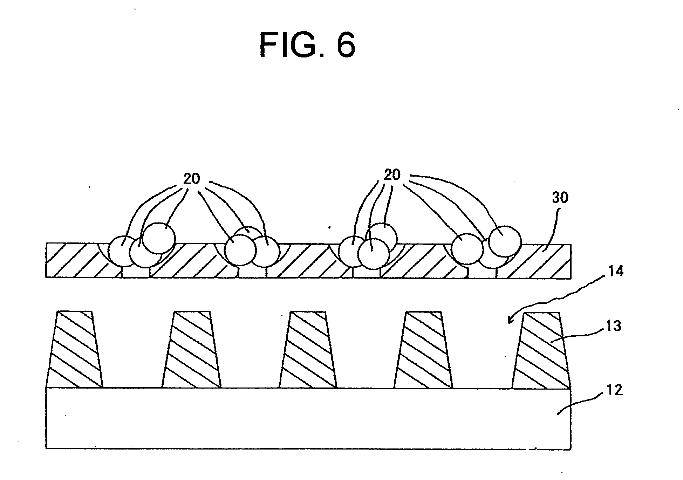

Figure 6 shows another mode of carrying out the process (b) shown in Figure 3 of the present invention.

In Figures 3(b) and 5, it is shown as if one fluorescent substance 20 is retained in one through hole 31. However, as shown in Figure 6, the method of the present invention is not limited to these figures, and a plurality of fluorescent substances 20 may be retained into one through hole 31. When one fluorescent substance 20 is retained in one through hole 31, it is necessary to prepare the fluorescent substances 20 so that their sizes are accurate to a certain extent because size and thickness of a fluorescent surface to be formed in a substrate is determined by the size of fluorescent substance 20. When the plurality of fluorescent substances 20 are retained in one through hole 31, it becomes unnecessary to accurately control the sizes of fluorescent substance 20 one by one because an entire amount of the plurality of fluorescent substance 20 can be controlled by the size of through hole 31. Accordingly, it becomes easy to produce the fluorescent substance 20.

Further, in this process, it may be possible to decrease a barometric pressure on a back side (facing the substrate) of the mask sheet 30 to be less than a barometric pressure on a front side (a side on which the substrate is provided) of mask sheet 30. By differentiating the barometric pressures on the front and back sides, it is possible to smoothly retain the fluorescent substances 20 in the through holes 31.

### Process shown in Figure 3(c)

This process is to melt the granules 20 which are under a state of being retained in the through holes 31, and to make the granules 20 thus melted drop into the cells 14 which are formed in the substrate and positioned under the mask sheet 30. According to the method of the present invention, a heating method and a heating means are not specifically limited as long as the granules can be heated up to about a melting temperature, for example, 50 to 180 degrees C. For example, it is possible to heat the entire mask sheet by an electrically heated wire, which is in advance embedded into the mask sheet 30, or carry out the entire process inside a heating chamber.

Further, in a step before carrying out this process and under a state where the fluorescent substances 20(20R, 20G, 20B) of the predetermined colors are mounted respectively in the through holes 31 (31R, 31G, 31B) as shown in Figure 5, it becomes possible to drop the granules 20 of each color respectively into the cells 14 (14R, 14G, 14B) by carrying out the process only at one clip.

Further, in this process, the barometric pressure on the front side of the mask sheet 30 (i.e. the side on which the substrate is not mounted) may be increased than that on the back side of the mask sheet 30 (i.e. the side to which the substrate faces). By differentiating the barometric pressures on the front and back sides of the mask sheet 30, it becomes possible to smoothly drop the fluorescent substance thus liquidized.

### Process shown in Figure 3(d)

This process is to vaporize the organic binder 21, which is contained in the granule 20 thus liquidized, and simultaneously solidify the fluorescent substance 22, which is contained in the liquid thus dropped, by heating the substrate 12 where the granule 20 thus liquidized is dropped, to thereby provide the fluorescent surface 15 inside the cell 14. In this process, the heating method and heating means with respect to the substrate 12 are not specifically limited. Any method and any means may be used as long as the organic binder 21 and the fluorescent substance 22 can be heated up to a temperature (specifically, for example 400 to 500 degree C) of enabling vaporization of the organic binder and solidification of the fluorescent substance 22. Further, the process shown in Figure 3(c) and this process shown in Figure 3(d), namely the process of heating to melt the granule 20 retained in the through hole 31 of mask sheet 30 and the process of heating to form the fluorescent surface 15, may be simultaneously carried out. When the process shown in Figure 3(c) and this process shown in Figure 3(d) are separately carried out, it is inferred that the mask sheet 30 is deformed by thermal expansion or the like in the heating step (i. e. heating to melt the granule 20) of the process shown in Figure 3(c). By this deformation, a positional relationship between the through hole 31 in the mask sheet 30 and the cell 14 on the substrate could be misaligned to prevent the granule 20 thus melted from dropping into the predetermined cell. However, by simultaneously carrying out the process shown in Figure 3(c) and the process shown in Figure 3(d), possibility of causing such the problem may be lowered.

As described above, according to the granule and the method for producing a fluorescent surface of plasma display panel using the granule of the present invention, it is possible to produce, easier and in a shorter time, the fluorescent surface having less unevenness, in comparison with the conventional technique.

## Claims

1. A granule comprising:
an organic binder as an auxiliary forming component; and
a fluorescent substance dispersed and blended into the organic binder.

2. The granule according to Claim 1, wherein
any one or both of an electric charge material and a magnetic material are dispersed and blended into the organic binder.

3. The granule according to Claim 1 or 2, wherein
the fluorescent substance has any one color of red color, blue color, and green color, and is provided to form fluorescent surfaces in cells of plasma display panel.

4. A method of forming a fluorescent surface of a plasma display panel having a plurality of cells as display elements provided in it, the cells being formed by barriers provided on any one of first and second substrates, which are disposed in parallel and opposite to each other, and the cells also being provided with the fluorescent surfaces made from a fluorescent substance in the plurality of cells, the method comprising steps of:
preparing the granules according to claim 1 and a mask sheet having a plurality of through holes, which can retain the granules, formed in it;
mounting the substrate having the barrier formed on it with its surface having the cells faced upwards;
disposing the mask sheet so that the through holes are positioned above the cells where fluorescent surfaces are to be formed on the substrate thus mounted;
dispersing the granules over a surface of the mask sheet thus disposed to retain the granules in the through holes provided in the mask sheet;
heating the granules thus retained to melt the granules and make the liquefied granule thus obtained drop inside the cells on the substrate using the through holes; and
heating the substrate having the liquefied granule thus dropped on it to vaporize the organic binder contained in the liquefied granule thus dropped and to simultaneously form the fluorescent surface inside the cells by the fluorescent substance contained in the liquefied granule thus dropped.

5. A method of forming a fluorescent surface of plasma display panel according to Claim 4, wherein
the granule according to Claim 2 is used instead of the granule according to Claim 1, and
in retaining the granules in the through holes provided in the mask sheet by dispersing the granules on a surface of the mask sheet thus disposed, the granule is selectively retained in a predetermined one of the through holes provided in the mask sheet by using electrostatic force or magnetic force.
